# EUROPÄISCHE PATENTSCHRIFT

(11) **EP 0 867 322 B1**
(45) Veröffentlichungstag und Bekanntmachung des Hinweises auf die Patenterteilung: **16.10.2002**
(21) Anmeldenummer: 97122143.7
(22) Anmeldetag: 16.12.1997
(51) Int. Cl.: B60J 11/00

(54) **Schutzdach für Wohnmobile und Wohnwagen**
Awning for caravan and mobile home
Toit de protection pour caravanes et autocaravanes

(30) Priorität: 24.03.1997 CH 69797; 03.06.1997 DE 29709641 U
(43) Veröffentlichungstag der Anmeldung: 30.09.1998
(73) Patentinhaber: H. Lisibach AG, 6382 Büren NW (CH)
(72) Erfinder: Lisibach, Hans, 6382 Büren NW (CH)
(74) Vertreter: Patent- und Rechtsanwaltssozietät, Maucher, Börjes & Kollegen

(56) Entgegenhaltungen:
- EP-A- 0 786 571
- US-A- 5 595 203

## Beschreibung

Die Erfindung betrifft ein Schutzdach für Wohnmobile und Wohnwagen, das aus einer Plane besteht, die durch quer zur Längsausdehnung der Plane verlaufende Tragbügel unter Bildung einer Wölbung getragen ist.
Es sind solche Dächer als Witterungsschutz bekannt, die auf tragenden Elementen aufliegen, welche im Mittelbereich sind, um eine Wölbung des Daches zum Abfluss von Regen- und Schnee-Schmelzwasser zu erreichen. Die Tragelemente bestehen hierbei aus Metallprofilen und müssen sehr massig ausgebildet sein, damit sie die nötige Biegung und Tragfähigkeit beibehalten. Sie wiegen bei den bekannten Schutzdächern etwa 2 kg. Die Plane ist hierbei mit den querliegenden Tragelementen durch Keder oder Nieten usw. fest verbunden. Durch diese Verbindung gestaltet sich die Montage des Daches auf einem Fahrzeug mühsam und umständlich. Zudem benötigt das demontierte und zusammengerollte Dach mit den gebogenen Tragelementen sehr viel Raum.

Aus der US-A 5 595 203 ist bereits ein Schutzzelt für Kraftfahrzeuge mit einer Plane bekannt, die von einer in sich stabilen Tragkonstruktion getragen wird. Die Tragkonstruktion des vorbekannten Schutzzeltes weist Tragbügel auf, die in ungespanntem Zustand gerade, aber im montierten Zustand durch die Zugspannung von an den Tragbügel-Enden angreifenden Zugseilen unter Bildung der Zeltwölbung gebogen sind. Um der Tragkonstruktion die erforderliche Stabilität zu geben, sind die Tragbügel über Längsbügel verbunden und auf Abstand gehalten, die in Längsrichtung orientiert sind. Über die Tragkonstruktion wird anschließend nur noch die Plane gelegt, bevor ein Kraftfahrzeug in das vorbekannte Schutzzelt einfahren und darunter geschützt abgestellt werden kann. Das vorbekannte Schutzzelt stellt eine in sich stabile, vielseitig nutzbare Schutzkonstruktion dar, die jedoch einen vergleichsweisen hohen Material- und Montageaufwand erfordert. Insbesondere das für ein großvolumiges Schutzzelt erforderliche und aus Tragbügeln, Längsbügeln, Zugseilen und Plane erforderliche Material benötigt einen solchen Stauraum, daß das vorbekannte Schutzzelt für Wohnmobile und Wohnwagen kaum geeignet erscheint.

Die Erfindung bezweckt daher die Schaffung eines Schutzdaches der genannten Art, das sich einfach und bequem montieren und demontieren läßt und das im demontierten Zustand nur einen vergleichsweise kleinen Stauraum erfordert. Die erfindungsgemäße Lösung dieser Aufgabe besteht in den Merkmalen des Anspruches 1.

Der vorliegende Erfindungsgegenstand ist als Schutzdach ausgebildet, das auf das Dach eines Wohnmobiles oder Wohnwagens aufgelegt werden kann. Es weist Tragbügel auf, die unter Verzicht auf weitere Längsbügel lediglich in Führungskanäle an der Unterseite der Plane eingelegt werden. Dabei werden die über die einseitig offenen Führungskanäle überstehenden Tragbügel derart in die an Sehnengurten vorgesehenen Taschen eingelegt, daß die ursprünglich geraden Tragbügel unter Bildung einer Wölbung gebogen sind. Mit Hilfe von elastisch dehnbaren Spanngurten wird das erfindungsgemäße Schutzach anschließend auf dem Dach des Wohnmobiles oder Wohnwagens gesichert. Das erfindungsgemäße Schutzdach ist rasch und mit geringem Aufwand montiert und erfordert nur vergleichsweise wenig Stauraum.

Die Tragbügel des erfindungsgemäßen Schutzdaches können z.B. aus

Alu-Rohren bestehen, die eine große Biege-Elastizität haben.

Sie erhalten ihre Tragfähigkeit nur durch die Biegung und Verspannung. Je stärker die Biegung, um so grösser wird ihre Tragfähigkeit, derart, dass ein solches Schutzdach auch grossen Belastungen durch Schnee und Winddruck standhält.
Im demontierten Zustand sind die Tragelemente lose und gerade und können gebündelt mit der gerollten Plane zusammen versorgt werden. Im Folgenden werden Sie wegen ihrer Funktion einfachheitshalber "Tragbügel" genannt. Das Dach hat ein sehr geringes Gewicht und kann bequem montiert und demontiert werden.

In der Zeichnung ist ein Ausführungsbeispiel der Erfindung dargestellt. Es zeigen:

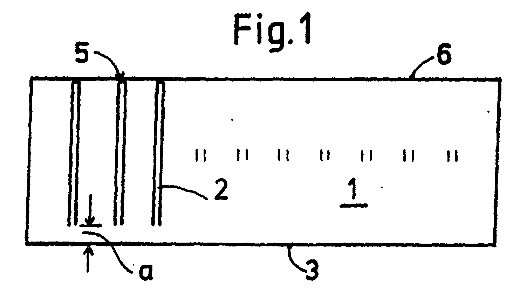

- Fig. 1: die Plane schematisch in Draufsicht,
- Fig. 2: den spannseitigen Bereich der Plane in ungespanntem Zustand im Querschnitt,
- Fig. 3: dasselbe in gespanntem Zustand im Querschnitt, und
- Fig. 4: dasselbe mehr im Detail, schräg von unten.

Das eigentliche Schutzdach besteht aus einer UV-beständigen Plane 1. Auf deren Unterseite sind im Abstand von 40 bis 60 cm Führungskanäle 2 nach Art eines "Hohlsaums" aufgenäht oder geschweisst, die an einem Ende 5 geschlossen sind und deren andere Enden offen sind und im Abstand von ca. 15 cm vom Rand 3 der Plane enden. Sie dienen zur Aufnahme der Tragbügel 4. Letztere bestehen aus nahtlos gezogenen Alu-Rohren von z.B. 13 mm Durchmesser und einer Wandstärke von z.B. 0,8 mm. Durch diese Beschaffenheit haben sie eine sehr hohe Biege-Elastizität und ein Gewicht von z.B. 350g. Diese Tragbügel werden in die Führungskanäle 2 bis zum Anschlag gegen deren geschlossenen Enden 5 eingeschoben.
Im Bereich des Längsrandes 6 der Plane sind zwischen dieser und den Führungskanälen 2 Sehnengurten 7 eingenäht, die sich unter den Führungskanälen zum anderen Längsrand der Plane erstrecken und am freien Ende je eine Tasche 8 aufweisen. Diese Taschen nehmen im montierten zustand die freien Enden 9 der Tragbügel 4 auf. Da diese länger sind als die Sehnengurten, üben letztere auf die Tragbügel eine Zugspannung aus, wodurch diese nach Art eines Pfeilbogens gekrümmt werden und eine mittlere Sehnenhöhe von etwa 40 cm bilden, was eine entsprechende Wölbung der Plane bewirkt.

Im Randbereich 3 der Plane sind auf deren Unterseite Spannlaschen 10 befestigt, die zum Strecken der Plane in Querrichtung über die Tragbügel 4 dienen (Pfeil Pf1). Wenn die Plane so gespannt ist, werden die Laschen 10 um die Taschen 8 herumgelegt (Pfeil P2) und mittels Klettverschluss 11 an den Sehnengurten 7 festgelegt. Die Sehnengurten 7 können mit Polstern 12 zur Auflage auf dem Dach des Wohnmobils versehen sein.

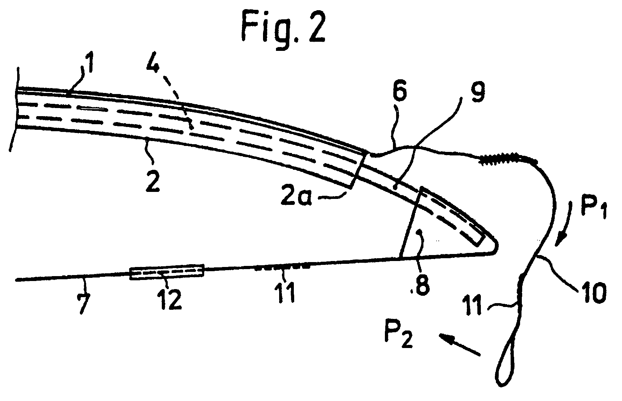

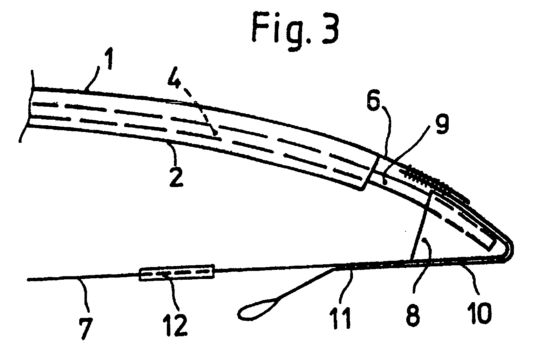

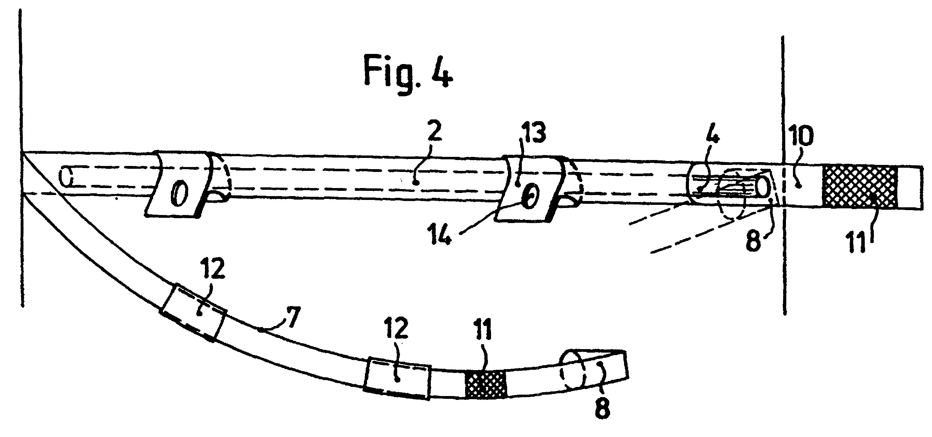

Zwecks Abspannung der Plane nach unten sind, wie näher im Fig. 4 dargestellt, über die Führungskanäle 2 greifende, an der Plane 1 befestigte Laschen 13 angeordnet, die je eine Öse 14 zur Aufnahme von gegebenenfalls elastisch dehnbaren Spanngurten tragen.
Zur Montage des Schutzdaches über einem Wohnmobil usw. wird die Plane 1 auf das Dach des Fahrzeuges gelegt, worauf die einzelnen Tragbügel 4 in die Führungskanäle 2 eingeschoben werden, bis sie an deren geschlossenem Ende 5 anstossen. Die freien Enden 9 der Bügel 4 werden nun unter Biegen (Stauchen) der Bügel in die Taschen 8 eingesteckt, so dass die Plane dadurch die gewünschte Wölbung erhält (Fig. 2). Nun wird mittels der Spannlaschen 10 der Randbereich 6 der Plane über die Bügel 4 gestrafft und die Spannlaschen werden mittels des Klettverschlusses 11 an den Sehnengurten 7 festgelegt (Fig. 3). Den Montagevorgang zeigt auch Fig. 4, in welcher der Tragbügel 4 noch gerade und die Sehnengurte 7 noch in ungestrecktem Zustand dargestellt ist.
In an sich bekannter Weise kann die Plane an einer oder beiden Stirnseiten mit einer zusätzlichen Abdeckbahn versehen sein, die, gegebenenfalls lösbar, mit dem Querrand der Plane verbunden ist. Dabei können Distanzblöcke aus Schaumstoff oder dgl. unterlegt werden, um die Karosserie des Fahrzeuges zu schonen und eine Art überstehendes "Vordach" zu schaffen.

## Patentansprüche

1. Schutzdach für Wohnmobile und Wohnwagen, mit einer Plane, die durch quer zur Längsausdehnung der Plane verlaufende Tragbügel (4) unter Bildung einer Wölbung getragen ist, wobei als Tragbügel (4) lose Rohre dienen, welche im ungespannten Zustand gerade, aber im montierten Zustand durch Zugspannung gebogen sind, um die Wölbung des Daches zu erzeugen,
mit Sehnengurten, die am einen Längsrand der Plane (1) befestigt sind und an ihrem anderen Ende eine Tasche (8) aufweisen, in welcher Tasche (8) die Tragbügel (4) unter Biegespannung eingesteckt sind,
mit Führungskanälen (2), die an der Unterseite der Plane (1) angebracht und zur Aufnahme und Führung jeweils eines Tragbügels (4) bestimmt sind, wobei jeder Führungskanal (2) am taschenseitigen Ende (2a) offen und am anderen Ende (5) geschlossen ist, derart, daß sich der Tragbügel (4) mit dem einen Ende gegen das geschlossene Ende (5) des Führungskanals (2) und mit dem anderen Ende in der Tasche (8) abstützt,
sowie mit Spanngurten, die zum Abspannen der Plane nach unten elastisch dehnbar sind.

2. Schutzdach nach Anspruch 1, **dadurch gekennzeichnet, daß** der Tragbügel (4) durch die Zugspannung je einer Sehnengurte (7) im gebogenen Zustand festgehalten wird.

3. Schutzdach nach Anspruch 1 oder 2, **dadurch gekennzeichnet, daß** die Plane (1) in Querrichtung durch Spannlaschen (10) über die Tragbügel (4) gespannt ist, welche Spannlaschen am zugeordneten Längsrand (6) der Plane befestigt und durch einen Klettverschluß (11) mit dem Ende der Sehnengurte (7) verbunden sind.

4. Schutzdach nach einem der Ansprüche 1 bis 3, **dadurch gekennzeichnet, daß** an der Plane (1) Halteösen (14) angebracht sind zur Aufnahme von Spanngurten zwecks Abspannung der Plane nach unten.

5. Schutzdach nach einem der Ansprüche 1 bis 4, **dadurch gekennzeichnet, daß** die Halteösen (14) an über die Führungskanäle (2) greifenden Laschen (13) mit der Plane verbunden sind.

6. Schutzdach nach einem der Ansprüche 1 bis 5, **dadurch gekennzeichnet, daß** als Tragbügel (4) Aluminiumrohre mit einem Durchmesser von nicht mehr als 13 mm und einer Wandstärke von nicht mehr als 0,8 mm dienen.

## Claims

1. Protective roof for caravans and mobile homes, with a cover which is supported by support bars (4) extending transverse to the longitudinal extent of the cover, forming a bulge, wherein loose tubes, which are straight when not tensioned but bent due to tensile stress when in their mounted position, serve as support bars (4) in order to produce the bulge in the roof, with chord straps which are attached to a longitudinal edge of the cover (1) and which have a pocket (8) on their other end, into which pocket (8) the support bars (4) can be inserted under the effect of bending stress, with guide channels (2) which are disposed on the underside of the cover (1) and are intended to each accept and guide a respective support bar (4), wherein each guide channel (2) is open at the pocket-side end (2a) and closed at the other end (5) in such a way that the support bar (4) supports itself with one end against the closed end (5) of the guide channel (2) and with the other end in the pocket (8), and with tensioning straps which are elastically stretchable for tensioning the cover downwards.

2. Protective roof according to claim 1, **characterised in that** the support bar (4) is held in its bent position by the tensile stress of a chord strap (7) in each case.

3. Protective roof according to claim 1 or 2, **characterised in that** the cover (1) is tensioned over the support bars (4) in the transverse direction by means of tensioning lashings (10) which are attached to the assigned longitudinal edge (6) of the cover and are attached to the ends of the chord straps (7) by means of a hook and loop fastener (11).

4. Protective roof according to one of claims 1 to 3, **characterised in that** holding eyelets (14) are attached to the cover (1) to accept tensioning straps for tensioning the cover downwards.

5. Protective roof according to one of claims 1 to 4, **characterised in that** the holding eyelets (14) are attached to the cover via lashings (13) which grip over the guide channels (2).

6. Protective roof according to one of claims 1 to 5, **characterised in that** aluminium tubes with a diameter of not more than 13 mm and a wall thickness of not more than 0.8 mm serve as support bars (4).

## Revendications

1. Toit de protection pour caravanes et auto-caravanes avec une bâche, qui est porté par des étriers de support (4), agencés transversalement à l'allongement longitudinal de la bâche, en formant un cintrage, des tubes libres faisant office d'étriers de support (4), qui sont droits dans l'état non tendu, mais sont courbés dans l'état monté par la tension de traction, afin de générer la courbure du toit,
avec des sangles à fibres, qui sont fixées sur un bord longitudinal de la bâche (1) et présentent sur leur autre extrémité une poche (8), poche (8) dans laquelle sont emboîtés les étriers de support (4) sous tension de flexion,
avec des canaux de guidage (2), qui sont disposés sur le dessous de la bâche (1) et sont destinés au logement et au guidage de respectivement un étrier de support (4), chaque canal de guidage (2) étant ouvert sur l'extrémité (2a) côté poche et fermé sur l'autre extrémité (5), de telle sorte que l'étrier de support (4) s'appuie par une extrémité contre l'extrémité (5) fermée du canal de guidage (2) et par l'autre extrémité dans la poche (8),
et avec des sangles de serrage qui sont extensibles de façon élastique pour tendre la bâche vers le bas.

2. Toit de protection selon la revendication 1, **caractérisé en ce que** l'étrier de support (4) est maintenu par la tension de traction d'une sangle à fibres (7) dans l'état courbé.

3. Toit de protection selon la revendication 1 ou 2, **caractérisé en ce que** la bâche (1) est tendue dans le sens transversal par des attaches de tension (10) par-dessus les étriers de support (4), lesquelles attaches sont fixées sur le bord longitudinal (6) attribué de la bâche et sont reliées par une fermeture autoagrippante (11) à l'extrémité de la sangle à fibres (7).

4. Toit de protection selon l'une quelconque des revendications 1 à 3, **caractérisé en ce que** sur la bâche (1) sont disposés des anneaux de maintien (14) destinés au logement de sangles de tension pour la tension de la bâche vers le bas.

5. Toit de protection selon l'une quelconque des revendications 1 à 4, **caractérisé en ce que** les anneaux de maintien (14) sont reliés à la bâche par des pattes (13) qui passent par-dessus les canaux de guidage (2).

6. Toit de protection selon l'une quelconque des revendications 1 à 5, **caractérisé en ce que** des tuyaux d'aluminium avec un diamètre pas supérieur à 13 mm et une épaisseur de paroi pas supérieure à 0,8 mm font office d'étriers de support (4).
